Europäisches Patentamt

European Patent Office

Office européen des brevets

(19)

(11) Veröffentlichungsnummer: **0 481 272 A1**

# (12) EUROPÄISCHE PATENTANMELDUNG

(21) Anmeldenummer: **91116625.4**

(22) Anmeldetag: **30.09.91**

(51) Int. Cl.5: **G01D 5/24**, G01L 9/12

(30) Priorität: **18.10.90 DE 4033053**

(43) Veröffentlichungstag der Anmeldung:
**22.04.92 Patentblatt 92/17**

(84) Benannte Vertragsstaaten:
**CH DE FR GB IT LI**

(71) Anmelder: **HOTTINGER BALDWIN
MESSTECHNIK GMBH
Im Tiefen See 45 Postfach 42 35
W-6100 Darmstadt(DE)**

(72) Erfinder: **Philipps, Michael
Am Hopfengarten 16
W-6100 Darmstadt(DE)**
Erfinder: **Schad, Hans-Dieter
Verdistrasse 7a
W-6100 Darmstadt 23(DE)**
Erfinder: **Viel, Wolfgang
Pfungstädter Strasse 72
W-6100 Darmstadt 13(DE)**

(74) Vertreter: **Brandt, Ernst-Ulrich
Hottinger Baldwin Messtechnik GmbH
Patentabteilung Im Tiefen See 45 Postfach
42 35
W-6100 Darmstadt(DE)**

(54) **Messwerterfassungs- und Übertragungseinrichtung.**

(57) Meßwerterfassungs- und Übertragungseinrichtung, die aus einer Aufnehmereinheit und einer Detektierungseinheit besteht, die kurzzeitig miteinander induktiv koppelbar sind. Die Aufnehmereinheit enthält eine Meßoszillatorschaltung, deren frequenzbestimmende Bauelemente in Abhängigkeit der zu messenden physikalischen Meßgröße veränderbar sind, und eine entsprechende Meßfrequenz erzeugen, die ein Maß für die gemessene physikalische Meßgröße darstellt. Die Aufnehmereinheit enthält darüber hinaus noch eine Referenzoszillatorschaltung, deren frequenzbestimmende Bauelemente im örtlichen und funktionellen Zusammenhang mit den frequenzbestimmenden Bauelementen der Meßoszillatorschaltung stehen. Die Aufnehmereinheit enthält auch eine Rechenschaltung, die aus der Referenzoszillatorfrequenz eine Referenzfrequenz bildet, die klein gegenüber der Meßfrequenz ist und ein Tor erzeugt, das eine nachfolgende Zählerschaltung betätigt, die die jeweiligen Meßimpulse während der Torzeit zählt und zur Steuerung eines elektronischen Schalters dient. Der elektronische Schalter belastet einen Übertragungsschwingkreis in der Aufnehmereinheit im Rhythmus der gezählten Meßimpulse, die induktiv in die Detektierungseinheit übertragen und dort demoduliert und weiterverarbeitet werden, so daß ein Signal entsteht, das die erfaßten Meßwerte enthält.

FIG.2

Die Erfindung betrifft eine Meßwerterfassungs- und Übertragungseinrichtung gemäß dem Oberbegriff des Patentanspruchs 1.

Bei der Ermittlung von physikalischen Meßgrößen, insbesondere Drücken, ist es häufig notwendig, diese an vorhandenen Geräteteilen festzustellen. Dabei ist es mitunter problematisch, geeignete Anschlußstellen für Aufnehmereinrichtungen zu finden. Es kommt auch häufig vor, daß derartige Anschlußstellen von ungünstigen Umgebungseinflüssen umgeben sind, die die Lebensdauer der Aufnehmereinrichtungen oder auch deren Meßgenauigkeit ungünstig beeinflussen. So ist es zweckmäßig, die physikalischen Meßgrößen an einem Meßort zu erfassen, in eine elektrische Größe umzuwandeln und an besser geeigneten Orten weiterzuverarbeiten. Hierbei treten insbesondere dann Schwierigkeiten auf, wenn eine galvanische Verbindung zwischen den Meßaufnehmereinrichtungen und den Verarbeitungseinrichtungen nicht möglich ist. Dies kommt an Geräteteilen vor, an denen aus dichtungstechnischen oder thermischen Gründen galvanische Verbindungen zu störanfällig sind. Insbesondere aber auch an derartigen Maschinenteilen, an denen die Meßwerterfassungsstelle gegenüber der Meßwertanzeige oder Verarbeitungsstelle relativ zueinander bewegbar ist.

Eine derartige Meßeinrichtung ist aus der DE-PS 29 51 139 bekannt. Dort ist eine Einrichtung beschrieben, die zur Überwachung des Luftdrucks im Reifen eines Fahrzeugrades dient. Dabei befindet sich am rotierenden Fahrzeugrad ein kapazitiver Druckaufnehmer, bei dem die Luftdruckänderung eine Kapazitätsänderung bewirkt. Der kapazitive Druckaufnehmer stellt dabei ein frequenzbestimmendes Bauteil eines Multivibrators dar, dessen Schwingfrequenz einem Maß für den gemessenen Reifendruck entspricht. Dieser Multivibrator ist mit einer Induktionsspule verbunden und stellt im Zusammenwirken mit der Meßkapazität eine Drucksensorbaueinheit dar. Der Drucksensor ist nun so angeordnet, daß er bei jeder Radumdrehung dicht an einer Induktionsspule einer Auswerteeinrichtung vorbeibewgt wird, die die frequenzmäßig umgewandelten Meßwertsignale empfängt und in entsprechende Signale umwandelt, die ein Maß für den gemessenen Luftdruck darstellen. Bei einer derartigen Meßeinrichtung ist es allerdings nicht erforderlich, daß die Druckluftmessung eine besondere Genauigkeit aufweist, da hierbei lediglich sichergestellt werden soll, daß der Luftdruck nicht unter einen bestimmten Grenzwert absinkt. So würde eine derartige Druckmeßeinrichtung zu erheblichen Meßfehlern führen, wenn sich die Umgebungstemperatur in der Nähe des Meßkondensators erheblich ändern würde, da sich dessen mechanische Abmessungen allein durch Materialdehnungen verändern würden. Um derartige Umgebungseinflüsse hinreichend ausschalten zu können, wäre ein hoher konstruktiver Aufwand nötig, der meist aus Platz- oder Gewichtsgründen an der Drucksensoreinrichtung nicht durchgeführt werden kann.

Der Erfindung liegt deshalb die Aufgabe zugrunde, eine Meßwerterfassungs- und Übertragungseinrichtung der eingangs genannten Art so zu verbessern, daß die zu messenden Daten so erfaßt und umgewandelt werden, daß sie auch bei längeren Übertragungsstrecken durch die unterschiedlichsten Umgebungseinflüsse nicht wesentlich verfälscht werden können und dies bei einer möglichst kompakten Aufnehmerbaueinheit.

Diese Aufgabe wird durch die im Patentanspruch 1 angegebene Erfindung gelöst. Weiterbildungen und vorteilhafte Ausführungsbeispiele sind in den Unteransprüchen angegeben.

Die Erfindung hat den Vorteil, daß die Meßgrößen bereits am Meßort durch Erfassungsbauelemente in eine elektrische Größe umgewandelt werden, die auch bei längeren Übertragungsstrecken weder durch ungünstige Umgebungseinflüsse noch bei realtiv zueinander bewegbaren Übertragungsteilen beeinflußt werden kann. Dadurch ist eine hohe Meßgenauigkeit einer derartigen Einrichtung erreichbar. Dies wird dadurch erzielt, daß sowohl das frequenzbestimmende Meßwerterfassungsbauelement als auch ein gleichartiges Referenzbauelement am Meßort angeordnet wird und hierdurch mit Hilfe einer in der Aufnehmerbaueinheit vorhandenen Rechenschaltung die ungünstigen Umgebungseinflüsse ausgeschaltet werden. So werden die durch die frequenzbestimmenden Bauelemente erzeugten Frequenzen in der Rechenschaltung so miteinander verknüpft, daß eine Quotientenbildung der erzeugten Frequenzen erreicht wird, die die ungünstigen Umgebungseinflüsse, die auf das Meßwerterfassungsbauelement und gleichermaßen auch auf das Referenzbauelement wirken, sich weitgehend aufheben.

Weiterhin besitzt eine derartige Erfassungseinrichtung den Vorteil, daß die Meßwerte im Grunde bereits als Digitalwerte erfaßt werden und ohne große elektrische Speiseleistung aufbereitet und übertragen werden können. Da für eine derartige Aufbereitung und Weiterbearbeitung der digitalen Meßwertergebnisse integrierte Schalteinrichtungen verwendbar sind, können derartige Aufnehmereinheiten in sehr kompakter Form hergestellt werden. Solche Aufnehmereinheiten sind deshalb auch an platzmäßig sehr ungünstig ausgebildeten Geräteteilen einsetzbar. Da solche digitalen Meßwertergebnisse eine Wechselspannung darstellen, können sie ohne große Umwandlungsschaltungen durch induktive Kopplungen berührungslos auf andere Empfangseinrichtungen übertragen werden. Eine galvanische Ankopplung ist deshalb nicht nötig, so daß derartige Aufnehmereinrichtungen auch an rotierenden Geräteteilen einsetzbar sind.

Die Erfindung wird anhand eines Ausführungsbeispiels, das in der Zeichnung dargestellt wird, näher erläutert. Es zeigen:

Fig. 1: den mechanischen Aufbau einer Meßwerterfassungs- und Übertragungseinrichtung zur Druckmessung;

Fig. 2: das Blockschaltbild einer Meßwerterfassungs- und Übertragungseinrichtung und

Fig. 3: eine Darstellung eines Signalverlaufs in Abhängigkeit des Referenzoszillators und des Meßoszillators.

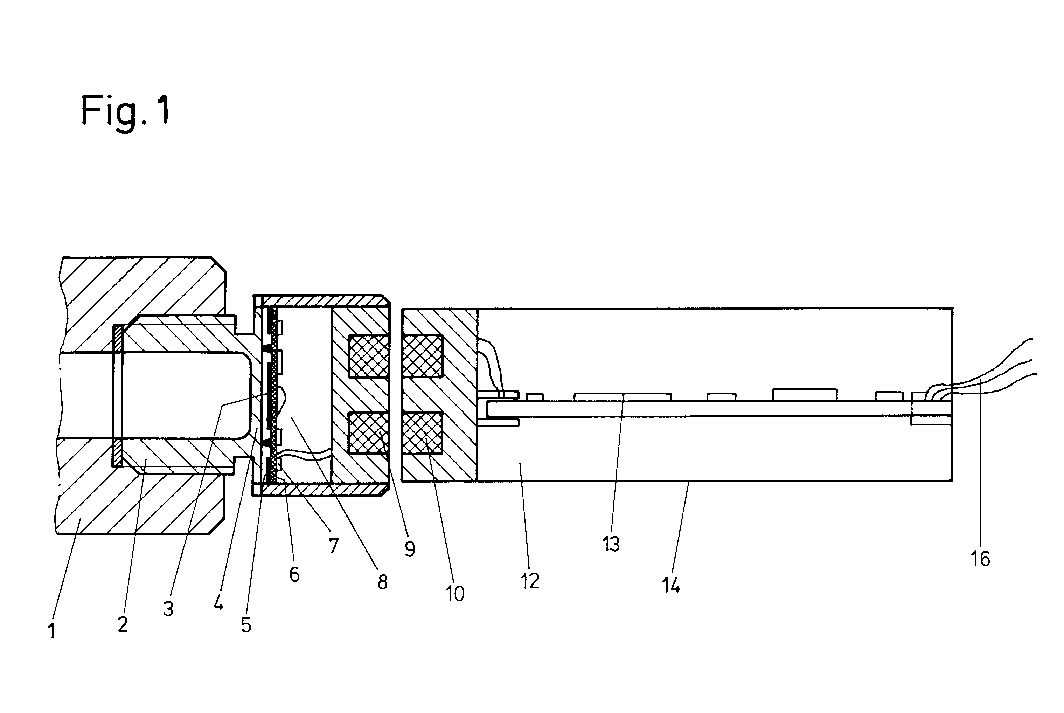

Die in Fig. 1 der Zeichnung dargestellte Meßwerterfassungs- und Übertragungseinrichtung besteht im wesentlichen aus einer Aufnehmer- 8 und einer Detektierungseinheit 12, bei der die Meßwertsignale durch eine induktive Kopplung von der Aufnehmer- 8 zur Detektierungseinheit 12 übertragbar sind.

Die Aufnehmereinheit 8 besteht aus einem Sensorteil 2 zur Erfassung eines Druckes. Dieser stellt ein hutförmiges Metallteil dar, das in ein Geräteteil 1 eingeschraubt ist, in dem sich das zu messende Druckmedium befindet. Die Deckelfläche des hutförmigen Metallteils ist dabei als Membran 4 ausgebildet, die bei entsprechenden Druckänderungen den Abstand zu einer gegenüberliegenden Meßelektrode 3 verändert. Die Meßelektrode 3 ist auf einem runden und flachen Trägerkörper aufgebracht, der sich in einem festen Abstand auf dem feststehenden Rand der Membran abstützt. Zwischen der Meßelektrode 3 und der Membran 4 befindet sich als Dielektrikum z. B. eine dünne Luftschicht.

Bei einer Druckänderung stellen die Membran 4 und die durch das Dielektrikum getrennte Meßelektrode 3 eine verstellbare Meßkapazität $C_m$ dar. Die geometrischen Abmessungen sind dabei so gewählt, daß sich die Kapazitätsänderung proportional der Druckänderung verhält.

Am äußeren Rand des Trägerkörpers ist zusätzlich noch eine ringförmige Referenzelektrode 5 angebracht, die mit einer gegenüberliegenden Ringfläche des Sensorteils eine Referenzkapazität $C_r$ bildet. Den Trägerkörper für die Meßelektrode bildet eine Platine 6, die auf ihrer gegenüberliegenden Seite noch mit elektronischen Bauelementen 7 bestückt ist. Bei den elektronischen Bauelementen 7 handelt es sich im wesentlichen um eine integrierte Rechenschaltung, die mit den Kapazitäten und Abgleichwiderständen eingangsseitig verbunden ist.

Aus den entsprechenden Eingangssignalen erzeugt die integrierte Rechenschaltung rechnerlesbare Ausgangssignale, die zu einer Induktionsspule 9 geschaltet werden. Dabei dient die Spule 9 als Übertragungselement, durch das die Meßsignale ohne galvanische Verbindung auf eine entsprechende Empfangseinrichtung übertragbar sind. Die Induktionsspule 9 ist oberhalb der Platine 6 angeordnet, und zwar auf der Seite, auf der sich auch die elektronischen Bauelemente 7 befinden und bildet den Abschlußdeckel eines gemeinsamen zylinderförmigen Aufnehmergehäuses. Dieser gesamte Druckaufnehmerteil ist mechanisch nur mit dem Geräteteil 1 verbunden, in dem sich das zu messende Druckmedium befindet und stellt deshalb eine abgeschlossene Aufnehmereinheit 8 dar.

Eine solche Aufnehmereinheit 8 zur Druckmessung ist sehr kompakt herstellbar, so daß ein derartiger Druckaufnehmer für Überdrücke bis zu einigen hundert bar lediglich Abmessungen besitzt, bei denen die Länge und der Durchmesser etwa 10 bis 15 mm betragen. Solche Aufnehmereinheiten 8 sind deshalb leicht in einen Druckkreislauf einzufügen, da sie sich durch ihre geringe Baugröße überall dort einfügen lassen, wo eine Gewindebohrung an den druckführenden Leitungen angebracht werden kann. Da auch keine galvanische Verbindung zu den entsprechenden Empfangseinrichtungen erforderlich ist, kann das Meßergebnis auch durch ein berührungsloses Vorbeiführen der entsprechenden Empfangseinrichtung an der Induktionsspule 9 der Aufnehmereinheit abgefragt werden. So sind auch Meßergebnisabfragen an rotierenden Systemen möglich. Da die Aufnehmereinheit 8 eine geschlossene Einheit darstellt, kann eine derartige Meßwerterfassungs- und Übertragungseinrichtung auch bei ungünstigen Umgebungseinflüssen eingesetzt werden, denn Dichtungsprobleme wie bei Kabeldurchführungen treten hierbei nicht auf.

Zum Empfang der durch die Aufnehmereinheit 8 erfaßten Meßwerte dient eine Detektierungseinheit 12. Die Detektierungseinheit besteht im wesentlichen aus einer Speise- und Empfangsspule 10, die mit einer Elektronikschaltung verbunden ist und die in einem zylindrischen Gehäuseteil 14 untergebracht sind. Diese Detektierungseinheit 12 ist ausgangsseitig durch Verbindungsleitungen 16 galvanisch mit entsprechenden Stromversorgungs- und Meßwertverarbeitungs- oder Anzeigeeinrichtungen verbunden.

Die Speise- und Empfangsspule 10 ist an einer Stirnseite der Detektierungseinheit 12 vorgesehen. Zweckmäßigerweise ist diese in einem Gehäusematerial eingegossen, das gleichzeitig als Träger- und Befestigungsteil weiterer Gehäuse- und Geräteteile dient. Die Speise- und Empfangsspule 10 ist mit einer Elektronikschaltung 13 verbunden, die im hinteren Gehäuseteil angeordnet ist.

Zum Abfragen der Meßergebnisse ist die Detektierungseinheit 12 mit dessen Stirnseite örtlich in die Nähe der Sende- und Speisespule 10 der Aufnehmereinheit 8 zu bringen. Hierbei reicht es bereits aus, wenn die Detektierungseinheit 12 oder auch die Aufnehmereinheit 8 in geringem Abstand aneinander vorbei bewegt werden. Die Detektierungseinheit 12 dient dabei dazu, die von der Aufnehmereinheit 8 erzeugten Druckmeßergebnisse im Rhythmus einer Taktfrequenz abzufragen, zu demodulieren, zu verstärken und an nachfolgende Meßwertverarbeitungs- oder Anzeigeeinrichtungen anzupassen. Soweit als Meßwertverarbeitungseinrichtung eine Datenverarbeitungsanlage vorgesehen ist, so ist eine entsprechende Datenumsetzerschaltung als Anpassung notwendig.

Eine entsprechende Meßwerterfassungs- und Übertragungseinrichtung ist aber nicht nur zu einer Druckmessung einsetzbar. Mit einer solchen Einrichtung sind alle beliebigen physikalischen Meßgrößen meßbar, die durch sensorische Bauelemente so erfaßbar sind, daß die sensorischen Bauelemente als frequenzbestimmende Bauteile in Oszillatorschaltungen verwendbar sind. So wären auch Weg- oder Kraftmessungen möglich, wenn die Aufnehmer die entsprechenden Meß- und Referenzelemente besitzen. Bei der oben genannten Druckmessung sind als frequenzbestimmende Bauelemente auch akustische Oberwellenresonatoren in Form eines Stimmgabelquarzes als Meß- und Referenzelement verwendbar.

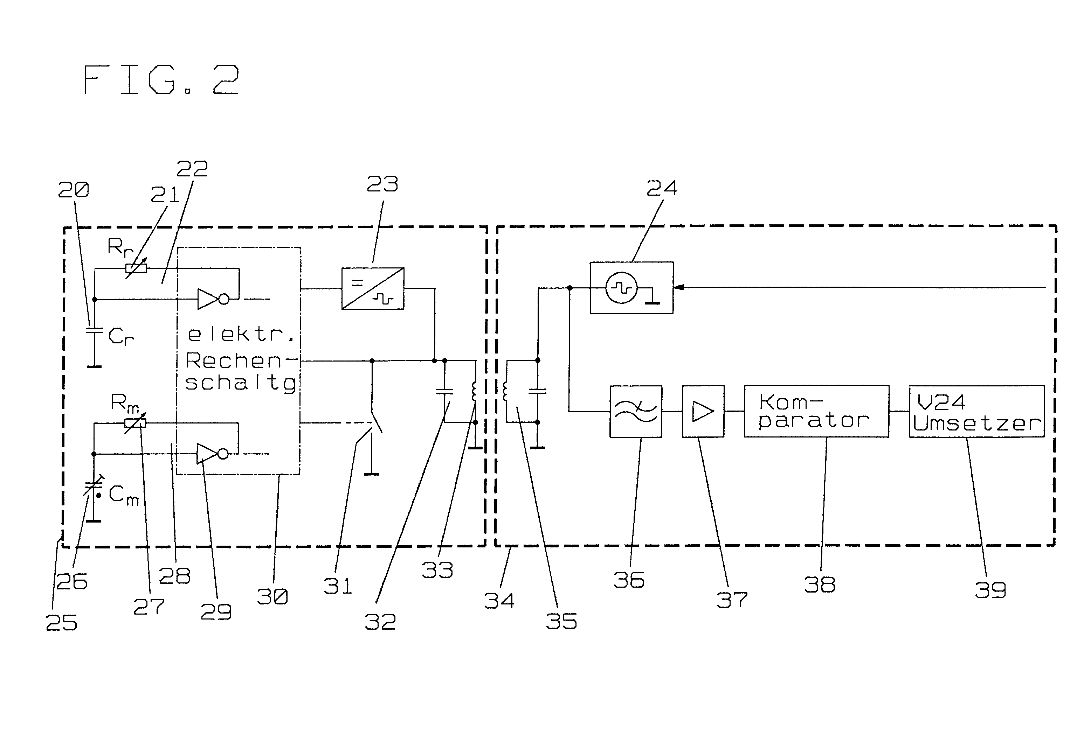

In Fig. 2 der Zeichnung ist der elektrische schaltungstechnische Aufbau der Meßwerterfassungs- und Übertragungseinrichtung in Form eines vereinfachten Blockschaltbildes dargestellt. Die Einrichtung besteht dabei aus einer Aufnehmer- 25 und einer Detektierungseinheit 34, die induktiv miteinander koppelbar sind.

Die Aufnehmereinheit 25 verfügt über zwei parallel zueinander dargestellte Oszillatorschaltkreise 22, 28, die mit einer elektronischen Rechenschaltung 30 verbunden sind. Bei den Oszillatorschaltkreisen 22, 28 handelt es sich um einen Meßoszillator 28 und einen Referenzoszillator 22, die als RC-Gatterschwingkreis geschaltet sind. Der Meßoszillator 28 enthält einen verstellbaren Abgleichwiderstand $R_m$ 27 und ein mit der zu messenden physikalischen Größe veränderbare Meßkapazität $C_m$ 26, die in Reihe geschaltet sind. Der Referenzoszillator 22 enthält ebenfalls einen verstellbaren Abgleichwiderstand $R_r$ 21, der mit einer im wesentlichen festen Referenzkapazität $C_r$ 20 in Reihe geschaltet ist. Beide Oszillatoren 22, 28 werden durch eine integrierte Rechenschaltung 30 miteinander verknüpft, so daß ein Ausgangssignal erzeugt wird, das einen elektronischen Schalter 31 steuert. Der elektronische Schalter 31 belastet einen Parallelschwingkreis 32, der aus einem Kondensator und einer Speise- und Sendeinduktivität 33 besteht und einen Übertragungsschwingkreis darstellt. Die Aufnehmereinheit 25 enthält zusätzlich noch eine Speiseschaltung 23, die aus einem von der Detektierungseinheit 34 empfangenen Wechselspannungssignal ein Gleichspannungssignal erzeugt, das zur Stromversorgung der Aufnehmereinheit 25 dient.

Die Detektierungseinheit 34 enthält eine Generatorschaltung 24 zur Erzeugung der Takt- und Speisewechselspannung. Die Generatorschaltung 24 ist mit einem zweiten Schwingkreis als Speise- und Empfangsschwingkreis 35 verbunden, der eine Speise- und Empfangsinduktivität und einen dazu parallel geschalteten Resonanzkondensator enthält. Der Speise- und Empfangsschwingkreis 35 ist parallel zur Generatorschaltung 24 auch mit einer Filterschaltung 36 verbunden, die zur Filterung und Demodulation des empfangenen Meßsignals dient. Das in der Filterschaltung 36 demodulierte Meßsignal wird nachfolgend einer Verstärkerschaltung 37, einem Komparator 38, und einem V24-Umsetzer 39 zugeführt. Bei dem am Ausgang der Umsetzerschaltung 39 anliegenden digitalen Meßsignal handelt es sich um ein standardmäßiges Digitalsignal, das dann maschinenlesbar in üblichen PC-Rechnern auswertbar ist.

Die Funktion der Meßwerterfassungs- und Übertragungseinrichtung stellt sich wie folgt dar: Die Oszillatorkapazitäten 20, 26 sind so angeordnet, daß die Meßkapazität $C_m$ 26 unmittelbar dem zu messenden Druck ausgesetzt ist. Dabei wird die Membran 4 als eine der Meßelektroden mit dem Meßdruck beaufschlagt, so daß sich der Abstand der beiden Elektroden 3, 4 verändert und so eine Kapazitätsänderung am Meßkondensator 26 bewirkt. Durch die Kapazitätsänderung wird der Meßoszillator 28 auf eine andere Schwingfrequenz abgestimmt. Dabei ist die Membran 4 der Meßkapazität 26 so ausgebildet, daß sich die Frequenzänderung weitgehend proportional zur Druckänderung verhält.

Ein derartiges Meßgrößenerfassungsverfahren könnte auch mit anderen frequenzbestimmenden Bauelementen erreicht werden. So wäre es denkbar, anstelle der Meßkapazität 26 eine Induktivität in einer anderen Oszillatorschaltung einzusetzen, bei der die Druckänderung zu einer Induktivitätsänderung z. B. durch Verschieben eines Eisenkerns in einer Spule verwandt würde. Gleichfalls könnte der zu messende Druck auch auf einen Stimmgabelquarz wirken, dessen Ausgangsfrequenz sich bei einer Druckänderung verändern würde.

Allerdings kann eine derartige Kapazitätsänderung auch durch Veränderung der Umgebungseinflüsse hervorgerufen werden, die das Meßergebnis dann verfälschen würden. So kommen insbesondere bei Druckänderungen häufig auch starke Temperaturänderungen vor, die regelmäßig zu nennenswerten Kapazitätsänderungen an einen wie vorstehend beschriebenen kapazitiven Aufnehmer führen würden und kompensiert werden müßten. Aber auch die Dielektrikumsänderungen und andere Umgebungseinflüsse wie z. B. starke Erschütterungen können zu Kapazitätsänderungen am Meßkondensator führen, ohne daß dies durch eine Meßgrößenänderung verursacht worden wäre. Deshalb ist in unmittelbarer Nähe zum Meßkondensator 26 noch ein Referenzkondensator 20 mit fester Kapazität angeordnet, der den gleichen Umgebungseinflüssen ausgesetzt ist wie der Meßkondensator 26. Da dieser Referenzkondensator 20 in seinem Aufbau auch weitgehend gleiche Konstruktionsmerkmale besitzt wie der Meßkondensator 26, treten unbeabsichtigte Kapazitätsänderungen bei beiden Kondensatoren nahezu im gleichen Verhältnis auf. Derartige unbeabsichtigte Kapazitätsänderungen führen deshalb bei beiden Oszillatoren 22, 28 zu vergleichbaren Schwingungsänderungen.

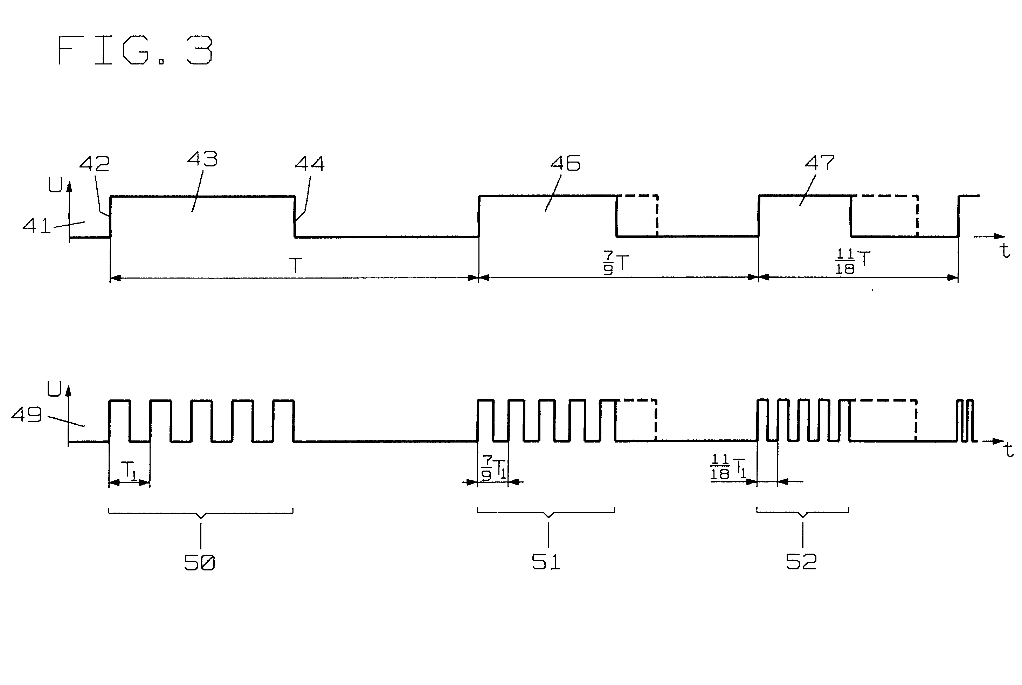

In der integrieren Rechenschaltung 30, die in Form eines "Gate-Array" ausgebildet ist, wird die von dem Referenzoszillator erzeugte rechteckförmige Referenzwechselspannung einer Frequenzteilerschaltung zugeführt. In der Frequenzteilerschaltung wird die relativ hohe Referenzfrequenz auf eine Frequenz heruntergeteilt, die klein gegenüber der vom Meßoszillator 28 erzeugten Meßfrequenz ist. Dadurch wird während der positiven Halbwelle eine Torung erreicht und während dieser Zeit ein Frequenzzähler eingeschaltet, der die Impulse der Meßfrequenz zählt. Dieser Vorgang ist aus dem Impulsdiagramm in Fig. 3 der Zeichnung näher ersichtlich. Das obere Impulsdiagramm 41 zeigt die nach der Teilung entstandenen Rechteckimpulse 43, deren positive Flanke 42 den Frequenzzähler einschaltet und deren negative Flanke 44 den Zähler abschaltet. Dieser Impuls 43 stellt das Meßtor des Frequenzzählers dar. Das untere Impulsdiagramm 49 zeigt dabei in vereinfachter Darstellung die von dem Meßoszillator 28 erzeugten Rechteckimpulse 50 bei einem konstanten Druck am Druckaufnehmer während der Tore. Die während dieser Torzeit gezählten Impulse 47 werden in der integrierten Rechenschaltung 30 einem Zwischenspeicher zugeführt und stehen damit zur späteren Bearbeitung zur Verfügung.

Die Zählung der Meßimpulse 50 während einer Torzeit stellt eine Quotientenbildung zwischen der Meßfrequenz und der geteilten Referenzfrequenz dar. Durch eine derartige Koppelung der geteilten Referenzimpulse 43 mit den Meßimpulsen 50 werden systembedingt bereits die wesentlichen Meßwertverfälschungen, die eine ungewollte Frequenzveränderung der Meßfrequenz verursachen, bereits ausgeschaltet. So könnte sich bei einer Temperaturänderung an der Membran 4 die Meßoszillatorfrequenz ungewollt erhöhen, ohne daß dem eine Druckänderung zugrunde liegt. Dies würde eine Änderung der Periodendauer $T_1$ zur Folge haben, wie sie aus der zweiten 51 und dritten Impulsfolge 52 des unteren Impulsdiagramms 49 in Fig. 3 der Zeichnung ersichtlich ist. Die Periodendauer $T_1$ könnte sich auf die Werte von $7/9\ T_1$ und $11/18\ T_1$ der ersten Impulsfolge verkürzen, was auch eine höhere Meßfrequenz bedeuten würde. Durch die Torbildung und die Zählung während der Torzeit wird aber eine systemimmanente Kompensation derartiger ungewollter Meßfrequenzänderungen erreicht. Dies wird durch die Erzeugung der Torzeit durch den frequenzbestimmenden Referenzkondensator 20 erzielt, dessen Frequenz bei Temperaturänderung im gleichen Verhältnis ansteigen wird. So wird auch die Torzeit eine Periodendauer T des zweiten Tores 46 von $7/9\ T$ und des dritten Tores 47 von $11/18\ T$ betragen. Aber auch dann würden sich immer z. B. 5 Impulse pro Zähldauer ergeben und somit zu dem gleichen Meßergebnis führen. Bei einer Konstruktion der frequenzbestimmenden Aufnehmerbauelemente 20, 26 , bei der die Referenzbauelemente 20 den gleichen meßergebnisverfälschenden Störquellen ausgesetzt sind wie die Meßbauelemente 26, würde durch die erfindungsgemäße Quotientenbildung ein wesentlicher Anteil der Meßwertverfälschungen ausgeschaltet werden.

Eine derartige Meßwertabfrage wird durch die integrierte Rechenschaltung 30 mit einer bestimmten Taktfrequenz fortlaufend festgestellt und in Schieberegisterschaltungen zwischengespeichert. Der bei jeder Taktung am Ende der Torzeit anstehende Zählerstand wird in der integrierten Rechenschaltung 30 gleichzeitig zu einem Standard-Seriellen-Schnittstellenformat ergänzt und parallelseriell gewandelt. Dabei wird die Taktfrequenz aus der Speisefrequenz der Speiseschaltung 23 abgeleitet. Die Speiseschaltung 23 in der Aufnehmerschaltung 25 empfängt ihre Speisespannung in Form einer annähernd rechteckförmigen Speisefrequenz von der Generatorschaltung 24 in der Detektierungseinheit 34 über die induktiv miteinander gekoppelten Parallelschwingkreise 32, 35. An der integrierten Rechenschaltung 30 steht an seinem Meßsignalausgang neben der vorgenannten Seriellen-Schnittstelle ein Pulsbreiten moduliertes Ausgangssignal zur Verfügung. Dieses Signal belastet entsprechend seinem Informationsgehalt den Parallelschwingkreises 32 der Aufnehmereinheit 25. Die Belastungsänderungen entsprechend dem Meßsignal werden durch die induktive Kopplung der beiden Parallelschwingkreise 32, 35 in die Detektierungseinheit 34 übertragen. In der Detektierungseinheit 34 steht am Ausgang des Speise- und Empfangsschwingkreises 35 praktisch ein Amplitudenmoduliertes Meßsignal zur Verfügung. Eine mit dem Speise- und Empfangsschwingkreis 35 in Reihe geschaltete Filterschaltung 36 als Demodulationsschaltung trennt das Meßsignal von dessen Träger, so daß an dessen Ausgang nur noch das digitale Meßsignal anliegt. Dieses wird einer nachfolgenden Verstärkerschaltung 37 zugeführt und entsprechend verstärkt. Das verstärke Meßsignal wird in einer nachgeschalteten Komparatorschaltung 38 regeneriert und in eine unverzerrte Rechteckspannung umgewandelt.

Die so aufbereiteten Meßsignale gelangen nachfolgend in einen V-24 Umsetzer 39 , der die Meßsignale in einen entsprechenden Schnittstellenspannungspegel umsetzt. Dabei wird in der V-24 Umsetzerschaltung 39 lediglich die bereits in der Aufnehmerschaltung 25 auf das serielle Schnittstellenformat gebrachten Meßsignale auf den entsprechenden Schnittstellenpegel angehoben, so daß die detektierten Meßwertsignale in nachfolgenden standardmäßigen Meßwertverarbeitungseinrichtungen wie PC-Rechnern verarbeitbar und anzeigbar sind.

## Patentansprüche

1. Meßwerterfassungs- und Übertragungseinrichtung bestehend aus einer Aufnehmereinheit und einer Detektierungseinheit, die mindestens kurzzeitig miteinander induktiv koppelbar sind und bei der die Aufnehmereinheit eine Meßoszillatorschaltung enthält, deren frequenzbestimmende Bauelemente in Abhängigkeit der zu messenden pyhsikalischen Meßgröße veränderbar sind und eine Meßfrequenz erzeugt, die ein Maß für die gemessene physikalische Meßgröße darstellt und mit Hilfe einer Induktionsspule in der Aufnehmereinheit in eine zweite Induktionsspule in der Detektierungseinheit übertragbar ist, dadurch gekennzeichnet, daß die Aufnehmereinheit (8, 25) eine Referenzoszillatorschaltung (22) enthält, deren frequenzbestimmende Bauelemente (20) im örtlichen und funktionellen Zusammenhang mit den frequenzbestimmenden Bauelementen (26) der Meßoszillatorschaltung (28) stehen und im wesentlichen der gleichen Bauart entsprechen, wobei die frequenzbestimmenden Bauelemente (20) der Referenzoszillatorschaltung (22) von Meßgrößenänderungen unbeeinflußbar sind und daß die Aufnehmereinheit (8, 25) eine Rechenschaltung (30) enthält, die aus der Referenzoszillatorfrequenz eine Referenzfrequenz bildet, die klein gegenüber der Meßfrequenz ist und ein Tor (43) bildet, das eine nachfolgende Zählerschaltung betätigt, die die jeweiligen Meßimpulse (50) während der Torzeit (43) zählt und zur Steuerung eines elektronischen Schalters (31) dient, der einen Übertragungsschwingkreis (32) in der Aufnehmereinheit (8) im Rhythmus der gezählten Meßimpulse (50) belastet.

2. Meßwerterfassungs- und Übertragungseinrichtung nach Anspruch 1, dadurch gekennzeichnet, daß die gezählten Meßimpulse (50) mit Hilfe einer Trägerfrequenzspannung moduliert werden und woduch die modulierten Meßimpulse auf die Spule eines zweiten Schwingkreises (35) in der Detektierungseinheit (12, 34) im gekoppelten Zustand übertragen und einer nachfolgenden Demodulationsschaltung (36) zugeführt werden, an dessen Ausgang ein binäres Meßsignal zur Verfügung steht, das ein Maß für die jeweilige gemessene physikalische Meßgröße darstellt.

3. Meßwerterfassungs- und Übertragungseinrichtung nach Anspruch 1 oder 2, dadurch gekennzeichnet, daß die Aufnehmereinheit (8, 25) zwei RC-Gatteroszillatoren 22, (28) enthält, wobei der Meßoszillator (28) über eine veränderbare Meßkapazität (26) verfügt, deren Kapazitätsänderung der Änderung der zu messenden physikalischen Meßgröße entspricht.

4. Meßwerterfassungs- und Übertragungseinrichtung nach Anspruch 3, dadurch gekennzeichnet, daß die Meßkapazität (26) so ausgebildet ist, daß sie entsprechend einer der Aufnehmereinheit (8, 25) ausgesetzten Druckänderung veränderbar ist.

5. Meßwerterfassungs- und Übertragungseinrichtung nach wenigstens einem der vorhergehenden Ansprüche, dadurch gekennzeichnet, daß die Aufnehmereinheit (8, 25) als integrierte Rechenschaltung (30) ein Gate-Array enthält, dessen Eingang sowohl mit der Meßkapazität (26) als auch mit der Referenzkapazität (20) verbunden ist und das eine Frequenzteilerschaltung enthält, die das Tor (43) zur Steuerung der Zählerschaltung bildet und ein Ausgangssignal erzeugt, das einen nachfolgenden elektronischen Schalter (31) im Rhythmus der während der Torung (43) gezählten Meßimpulse (50) steuert.

6. Meßwerterfassungs- und Übertragungseinrichtung nach wenigstens einem der vorhergehenden Ansprüche, dadurch gekennzeichnet, daß die Aufnehmereinheit (8, 25) einen Parallelschwingkreis (32) enthält, der mit dem Ausgang des Gate-Array (30) und einer Speiseschaltung (33) verbunden ist und parallel zum elektronischen Schalter (31) geschaltet ist.

7. Meßwerterfassungs- und Übertragungseinrichtung nach wenigstens einem der vorhergehenden Ansprüche, dadurch gekennzeichnet, daß die Aufnehmereinheit (8, 25) eine Speiseschaltung (23) enthält, die eingangsseitig mit dem Parallelschwingkreis (32) verbunden ist, der induktiv mit einer in der Detektierungseinheit (12, 34) vorhandenen Generatorschaltung (24) gekoppelt ist, die eine rechteckförmige Wechselspannung erzeugt, die in der Speiseschaltung (23) in entsprechende Steuer- und Versorgungsspannungen umgewandelt wird und ausgangsseitig mit dem Gate-Array (30) verbunden ist.

8. Meßwerterfassungs- und Übertragungseinrichtung nach wenigstens einem der vorhergehenden Ansprüche, dadurch gekennzeichnet, daß die Detektierungseinheit (12, 34) einen zweiten Parallelschwingkreis (35) enthält, der außer zur Übertragung der Speisewechselspannung auch zum Empfang der modulierten Meßimpulse dient und parallel zur Generatorschaltung (24) mit einer Demodulatorschaltung verbunden ist, die als Filterschaltung (36) ausgebildet ist und die die binären Meßimpulse (50) von der modulierten Trägerfrequenzspannung trennt, so daß ausgangsseitig jeweils ein binäres Meßsignal zur Verfügung steht, das der jeweiligen Meßgröße entspricht.

9. Meßwerterfassungs- und Übertragungseinrichtung nach wenigstens einem der vorhergehenden Ansprüche, dadurch gekennzeichnet, daß die Detektierungseinheit (12, 34) eine Verstärkerschaltung (37) enthält, die eingangsseitig mit der Demodulierungsschaltung (36) verbunden ist und die entsprechenden binären Meßsignale (50) verstärkt und einer nachfolgenden Komparatorschaltung (38) übermittelt.

10. Meßwerterfassungs- und Übertragungseinrichtung nach wenigstens einem der vorhergehenden Ansprüche, dadurch gekennzeichnet, daß die Komparatorschaltung (38) so ausgebildet ist, daß die empfangenen Binärsignale zur Steuerung einer Kippschaltung dienen, so daß am Ausgang der Komparatorschaltung (38) unverzerrte Binärsignale zur Verfügung stehen, die einem Wert der entsprechend gemessenen pyhsikalischen Meßgröße entsprechen.

11. Meßwerterfassungs- und Übertragungseinrichtung nach Anspruch 9, dadurch gekennzeichnet, daß die Komparatorschaltung (38) ausgangsseitig mit einem V-24-Umsetzer (39) verbunden ist, der die binären Meßwertsignale in maschinenlesbare Signale umwandelt und der ausgangsseitig über Verbindungsleitungen (16) an entsprechende Auswerte- oder Anzeigeeinrichtungen anschließbar ist.

12. Meßwerterfassungs- und Übertragungseinrichtung nach wenigstens einem der vorhergehenden Ansprüche, dadurch gekennzeichnet, daß das Gate-Array (30) so ausgebildet ist, daß es den binären Meßsignalen am Ausgang der Zählerschaltung gleichzeitig Steuersignale hinzufügt, die zur maschinenlesbaren Auswertung der Meßsignale dienen.

13. Meßwerterfassungs- und Übertragungseinrichtung nach wenigstens einem der vorhergehenden Ansprüche, dadurch gekennzeichnet, daß die Aufnehmereinheit (8, 25) aus einem zylindrischen Gehäuse besteht, das an seiner einen Seite über einen Gewindeanschluß verfügt, der in ein Gerätebauteil (1) einschraubbar ist, in dem sich das zu messende Druckmedium befindet.

14. Meßwerterfassungs- und Übertragungseinrichtung nach wenigstens einem der vorhergehenden Ansprüche, dadurch gekennzeichnet, daß der Schraubanschluß eine Öffnung enthält, die an ihrem Ende durch eine membranartige Metallschicht (4) verschlossen ist, die eine Elektrode der Meßkapazität (26) darstellt und auf deren gegenüberliegender Seite in einem bestimmten Abstand einer Platine (6) gegenüber steht, die eine weitere Elektrode 3 enthält, die im Zusammenwirken mit der dazwischenliegenden Luftschicht die Meßkapazität (26) darstellt.

15. Meßwerterfassungs- und Übertragungseinrichtung nach Anspruch 14, dadurch gekennzeichnet, daß an den Rändern der Platine (6) eine zusätzliche ringförmige Referenzelektrode 5 angeordnet ist, die mit einem gegenüberliegenden scheibenförmigen Metallteil, das die Verlängerung der Membran 4 darstellt, gleichzeitig die Referenzkapazität (20) bildet.

16. Meßwerterfassungs- und Übertragungseinrichtung nach Anspruch 15, dadurch gekennzeichnet, daß auf der der Elektrode 3 gegenüberliegenden Seite der Platine (6) die elektronischen Bauelemente 7 angeordnet und mit einer darüberliegenden Induktivität 9, 33 verbunden sind, die in einem deckelförmig ausgebildeten Trägerteil eingelassen ist und den Abschluß der anderen Zylinderseite darstellt und eine geschlossene Aufnehmereinheit (8, 25) bildet.

17. Meßwerterfassungs- und Übertragungseinrichtung nach wenigstens einem der vorhergehenden Ansprüche, dadurch gekennzeichnet, daß die Detektierungseinheit (12, 34) eine zylinderförmig ausgebildete Baueinheit darstellt, die an ihrer einen Stirnseite über eine in einem Trägermaterial eingelassene Induktivität 10 verfügt, die mit einer elektronischen Schaltung 13 verbunden ist, die sich in der zylinderförmigen Detektierungseinheit befindet und den zweiten Parallelschwingkreis (35), die Generatorschaltung (24), die Demodulationsschaltung (36), die Verstärkerschaltung (37), die Komparatorschaltung (38) und den V-24-Umsetzer (39) enthält und so an einem Geräteteil befestigt ist, daß es wenigstens kurzzeitig an der Stirnseite der Aufnehmereinheit vorbeibewegbar ist.

18. Meßwerterfassungs- und Übertragungseinrichtung nach wenigstens einem der vorhergehenden Ansprüche, dadurch gekennzeichnet, daß die Aufnehmereinheit (8, 25) und die Detektierungseinheit (12, 34) so ausgebildet sind, daß deren Stirnseiten, in denen die Induktivitäten (9, 10) eingelassen sind, gegenüberstehend angeordnet sind und durch Verbindungselemente in ihrer Lage gehalten werden.

19. Meßwerterfassungs- und Übertragungseinrichtung nach wenigstens einem der vorhergehenden Ansprüche, dadurch gekennzeichnet, daß die Meßoszillatorschaltung (28) als frequenzbestimmendes Bauelement einen Stimmgabelquarz enthält, der so ausgebildet ist, daß sich dessen Schwingfrequenz mit der auf ihn jeweils wirkenden Druckbelastung entsprechend verändert.

20. Meßwerterfassungs- und Übertragungseinrichtung nach Anspruch 19, dadurch gekennzeichnet, daß die frequenzbestimmenden Bauelemente (20) der Referenzoszillatorschaltung (22) einen Stimmgabelquarz darstellen.

# Fig. 1

FIG. 2

# FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-A-2 951 139  (ROBERT BOSCH GMBH)<br>* Abbildungen 4,5 * *<br>– – – | 1,4,7 | G 01 D 5/24<br>G 01 L 9/12 |
| A | US-A-3 886 473  (H.D. HEYCK)<br>* Spalte 7, Zeile 50 - Spalte 8, Zeile 7; Abbildung 6 * *<br>– – – | 1,4 | |
| A | US-A-3 790 910  (W.H. MCCORMACK)<br>* Spalte 2, Zeile 27 - Spalte 3, Zeile 5; Abbildung 1 * *<br>– – – | 1,4 | |
| A | DE-A-3 517 781  (HEINRICH WÜRST KG)<br>* Anspruch 1 * *<br>– – – | 3 | |
| A | WO-A-8 904 089  (ROSEMOUNT INC.)<br>* Seite 11, Zeile 20 - Seite 12, Zeile 19 * *<br>– – – | 5,11,12 | |
| A | RADIO FERNSEHEN ELEKTRONIK Bd. 38, Nr. 9, 1989, BERLIN,DD Seite 601; G.TURINSKY: 'KAPAZITIVER AB-STANDSSENSOR'<br>* linke Spalte * *<br>– – – | 14,19,20 | |
| A | ELEKTRONIK Bd. 31, Nr. 9, Mai 1982, MÜN-CHEN,DEUTSCHLAND KLAUS HOFFMANN: 'DRUCKMESSUNG IN DER MEDIZIN'<br>* Abbildung 2B * *<br>– – – – – | 14,15 | **RECHERCHIERTE SACHGEBIETE (Int. Cl.5)**<br><br>G 01 D<br>G 01 L |

Der vorliegende Recherchenbericht wurde für alle Patentansprüche erstellt

| Recherchenort | Abschlußdatum der Recherche | Prüfer |
|---|---|---|
| Den Haag | 21 Januar 92 | LUT K. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-------------------------------------------------------
& : Mitglied der gleichen Patentfamilie, übereinstimmendes Dokument